# EUROPEAN PATENT APPLICATION

(11) **EP 3 045 350 A1**
(43) Date of publication of application: **20.07.2016**
(21) Application number: 16151484.9
(22) Date of filing: 15.01.2016
(51) Int. Cl.: B60P 1/26

(54) **LOCKING TAILGATE FOR A TRAILED VEHICLE**

(30) Priority: 16.01.2015 IE 20150009
(71) Applicant: Kennedy, John, Tipperary (IE); Nolan, Michael, Myshall, County Carlow (IE); Nolan, Henry, Myshall, County Carlow (IE); Nolan, John, Fenagh, County Carlow (IE)
(72) Inventor: Kennedy, John, Tipperary (IE); Nolan, Michael, Myshall, County Carlow (IE); Nolan, Henry, Myshall, County Carlow (IE); Nolan, John, Fenagh, County Carlow (IE)
(74) Representative: O'Neill, Brian

(57) **Abstract**

The present invention provides a trailer comprising a trailer body coupled to a lockable tailgate (12), and at least one ram (14) disposed between the trailer body and the tailgate, wherein the trailer body is coupled to the lockable tailgate by at least one hinge assembly (16) and at least one locking device (20,22), and wherein the ram is operable to open and close the tailgate.

## Description

### Field of the Invention

This invention relates to a trailer having a lockable tailgate.

### Background of the Invention

Tailgates form part of trailed vehicles such as trailers and are typically located at the rear of the trailer. In a closed and locked configuration, the tailgate is arranged to retain material to be transported in the trailer. When the material is to be loaded into or ejected from the trailer, the tailgate is unlocked and then opened. A conventional locking tailgate requires the operator to exit the cabin of a tractor or other vehicle that is towing the trailer and manually unlock the tailgate, return to the cabin and empty the contents of the trailer via whatever method that trailer uses (tipping / ejector plate / walking floor). The operator then relies on gravity and/or momentum due to the weight and position of the tailgate to close it again, and the operator must then exit the cab and lock the tailgate. This process can sometimes be unsafe as some trailer loads can cause pressure to act on the tailgate and, once unlocked, the tailgate can swing open with force potentially causing injury to the operator.

Hydraulically controlled tailgates are known in the art and are used to overcome some of the drawbacks of manually operated tailgates. However, such tailgates have themselves a number of drawbacks. For example, the components of the hydraulically controlled tailgates generally overlap or project beyond the sides of the main trailer body. Due to the positioning of the trailer tailgate at the rear of the trailer, it can also be difficult for an operator to have an adequate view of the trailer and tailgate. This can result in parts of a tailgate assembly impacting or getting caught in obstacles (e.g. a gate or gate posts) that the pulling vehicle and trailer body would otherwise pass without problem. Also, this can cause damage to the tailgate and/or to the obstacles themselves.

The present invention had been devised with a view to mitigating these problems.

### Summary of the Invention

Accordingly, the present invention provides a trailer comprising
a trailer body coupled to a lockable tailgate, and
at least one ram disposed between the trailer body and the tailgate,
wherein the trailer body is coupled to the lockable tailgate by at least one hinge assembly and at least one locking device, and
wherein the ram is operable to open and close the tailgate.

The trailer of the invention offers the operator of said trailer greater control of the tailgate compared to that of a conventional tailgate. The trailer may be operated remotely, for example, from the cabin of a tractor or other vehicle to which the trailer is coupled. Therefore, the trailer of the invention removes risks associated with the manual operation of the trailer since the operator does not have to leave the safety of the tractor or vehicle as the unlocking, opening, closing and re-locking of the tailgate may all be controlled remotely.

Optionally, the trailer body comprises opposing and spaced apart first and second sidewalls. Optionally, the tailgate is disposed between the first and second sidewalls. Optionally, the tailgate is disposed between, and at the ends of, the first and second sidewalls. Optionally, the tailgate is substantially planar. Optionally, the tailgate is coupled to at least one of said sidewalls by at least one hinge assembly. Optionally, the tailgate is coupled to each sidewall by at least one hinge assembly. Optionally, the tailgate comprises first and second ends wherein the first end of the tailgate is coupled to the first sidewall by at least one hinge assembly, and the second end is coupled to the second sidewall by at least one hinge assembly.

Optionally, the hinge assembly comprises first and second hinge parts that are respectively complementary. Optionally, the hinge assembly comprises first and second hinge parts which are arranged to rotate, optionally pivot, relative to each other. Optionally, the first hinge part is located on the trailer body and the second hinge part is located on the tailgate. Optionally, the first hinge part is located on a sidewall of the trailer body and the second hinge part is located on the tailgate. Alternatively, the first hinge part is located on the tailgate and the second hinge part is located on the trailer body. Optionally, the first hinge part is located on the tailgate and the second hinge part is located on a sidewall of the trailer body.

Optionally, the hinge assembly comprises a slotted hinge. Optionally, the slotted hinge comprises a first hinge part comprising a pin and a second hinge part comprising a slotted plate having a slot sized and shaped for receiving and retaining the pin. In this arrangement, the slotted plate can undergo translational movement about the pin, and can rotate, or pivot, about the pin. Seen another way, that pin can move along the slot of the slotted plate and can rotate, or pivot, within the slot. Optionally, the slotted plate is located on the tailgate and the pin is located on the trailer body. Alternatively, the pin is located on the tailgate and the slotted plate is located on the trailer body. Optionally, the slotted plate is located on the tailgate and the pin is located on a sidewall of the trailer body. Alternatively, the pin is located on the tailgate and the slotted plate is located on a sidewall of the trailer body.

Optionally, the locking device comprises first and second device parts that are respectively complementary. Optionally, the locking device comprises first and second device parts that are reversibly engagable between a locked position and an unlocked position. Optionally, the first device part is located on the tailgate and the second device part is located on the trailer body. Alternatively, the first device part is located on the tailgate and the second device part is located on a sidewall of the trailer body.

Optionally, the locking device comprises a first device part comprising a locking plate and a second device part comprising a dowel. Optionally, the locking plate and the dowel are reversibly engagable. Optionally, the locking plate comprises a slot that is sized and shaped to receive the dowel. Optionally, the locking plate comprises a slot that is sized and shaped to reversibly receive the dowel. Optionally, locking plate is located on the tailgate and the dowel is located on the trailer body. Alternatively, the locking plate is located on the tailgate and the dowel is located on a sidewall of the trailer body. Optionally, when the tailgate is in a closed or locked position, the locking plate is disposed in the interior of the trailer.

Optionally, the trailer comprises at least one ram that is operable to lift the tailgate. Optionally, the trailer comprises at least one ram that is operable to lift the tailgate and rotate, or pivot, the tailgate about the pin. Optionally, the trailer comprises a ram that is operable to lift the tailgate and a further ram that is operable to rotate, or pivot, the tailgate about the pin.

Optionally, the ram is a double-acting ram. Optionally, the ram is a hydraulic cylinder, optionally a double-acting hydraulic cylinder. Optionally, the ram is disposed between, and mounted to, the trailer body and the tailgate. Optionally, the ram is disposed between, and mounted to, a sidewall of the trailer body and the tailgate. In this arrangement, and from a closed or locked configuration, extension of the ram causes the tailgate to be lifted relative to the trailer body, thus causing the first hinge part to be lifted relative to the second hinge part, and the first device part to be lifted relative to the second device part causing the first and second device parts to disengage. Further extension of the ram causes the tailgate to rotate, or pivot, about the pin. Retraction of the tailgate causes the tailgate to rotate, or pivot, about the pin in the opposite direction. Further retraction of the ram causes the tailgate to be lowered relative to the trailer body, thus causing the first hinge part to be lowered relative to the second hinge part, and the first device part to be lowered relative to the second device part causing the first and second device parts to re-engage. Optionally, the ram is attached to the trailer body, optionally to a sidewall, via a mount, optionally a hydraulic cylinder mount. Optionally, the ram is attached to the tailgate via a mount, optionally a hydraulic cylinder mount.

Optionally, the trailer is configured to be reversibly attached to a tractor or other towing vehicle. Optionally, the trailer is configured to be towed by a tractor or other towing vehicle. Alternatively, the trailer is configured to be mounted to a vehicle. In other words, the trailer may be configured to be integrally formed with a vehicle, or may be reversibly mountable to the vehicle.

Optionally, the trailer comprises connection means to connect to a power unit operable to provide power to the rams comprised in the trailer. Optionally, the power unit is located in a tractor or other towing vehicle to which the trailer may be reversibly attached, or located in a vehicle to which the trailer may be mounted. Alternatively, the trailer comprises a power unit operable to provide power to the rams comprised in the trailer. Optionally, the power unit comprises an engine for providing power via a hydraulic circuit comprised in the trailer, the hydraulic circuit driving the movement of the hydraulic rams of the trailers. Alternatively, the power unit is a generator for supplying electrical power, a compressor for supplying pneumatic power, an engine for providing mechanical power, or any combination of these and other known power mechanisms, operable to provide power to the rams comprised in the trailer.

### Brief Description of the Drawings

Embodiments of the present invention will now be described, by way of example, with reference to the accompanying drawings, in which:
Figure 1 is a side view of a part of the trailer of the invention comprising a tailgate;
Figure 2 is a side view of the part of the trailer of Figure 1 viewed from the interior of the trailer;
Figures 3a to 3d are a series of drawings depicting the operation of the tailgate;
Figure 4a is a magnified, side view of a hinge assembly which may be used to couple the tailgate to the trailer body;
Figure 4b is a side view of a hinge assembly of Figure 4a in which the tailgate has been lifted relative to the trailer body;
Figure 5a is a magnified, side view of a locking device which may be used to reversibly lock the tailgate to the trailer body;
Figure 5b is a side view of a locking device of Figure 5a in which the tailgate has been lifted relative to the trailer body;
Figure 6a is a side view, a front view, and a perspective view of a slotted plate which may be comprised in the trailer of the invention;
Figure 6b is a side view, a front view, and a perspective view of support plates which may be comprised in the trailer of the invention;
Figure 6c is a side view, a front view, and a perspective view of a locking plate which may be comprised in the trailer of the invention;
Figure 7 is a front view of the trailer of Figures 3a to 3d; and
Figure 8 is a magnified, perspective view of a part of the sidewall of the trailer of the invention to which the tailgate and ram are mounted.

### Description of Preferred Embodiments

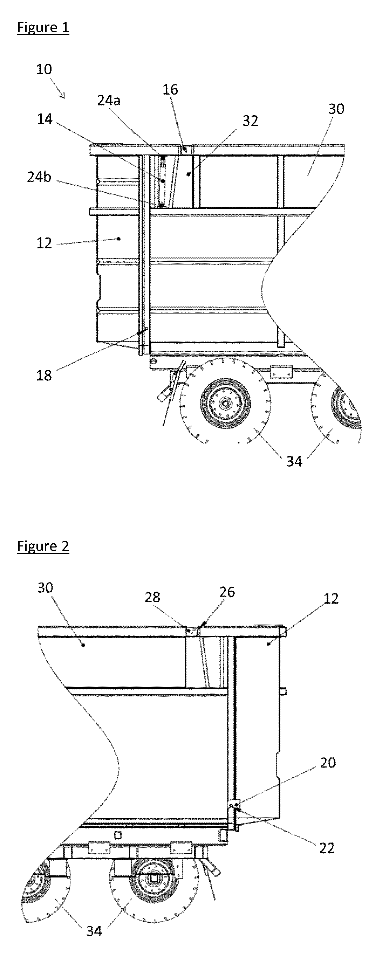

As illustrated in Figure 1, the present invention provides a trailer 10 comprising a trailer body coupled to a lockable tailgate 12. The trailer body is coupled to the lockable tailgate 12 by at least one hinge assembly 16 and at least one locking device 18. The trailer 10 further comprises at least one ram 14 disposed between the trailer body and tailgate 12 which is operable to open and close the tailgate 12. The ram 14 may comprise mounts 24a, 24b for attaching the ram 14 to the trailer body and tailgate 12. The tailgate 12 illustrated in Figure 1 is in a closed configuration and the ram 14 is in a contracted state.

Any suitable rams may be used in the trailer 10 of the invention. In particular, hydraulic cylinders may be used. Advantageously, such cylinders are double-acting hydraulic cylinders. Hydraulic cylinders generally comprise a rod or piston that extends from (and/or retracts into) the cylinders as a results of pumping hydraulic oil into the cylinders.

Figure 2 provides a cutaway view of the interior of the trailer in which a locking device in the form of a locking plate 20 located on the tailgate 12 can be seen to engage a dowel 22 located on the sidewall 30 of the trailer body. In this configuration, the tailgate 12 is closed and locked. In the illustrated embodiment, the hinge assembly 16 comprises a slotted plate 26 located on the tailgate 12, and a pin 28 located on the sidewall 30 of the trailer body.

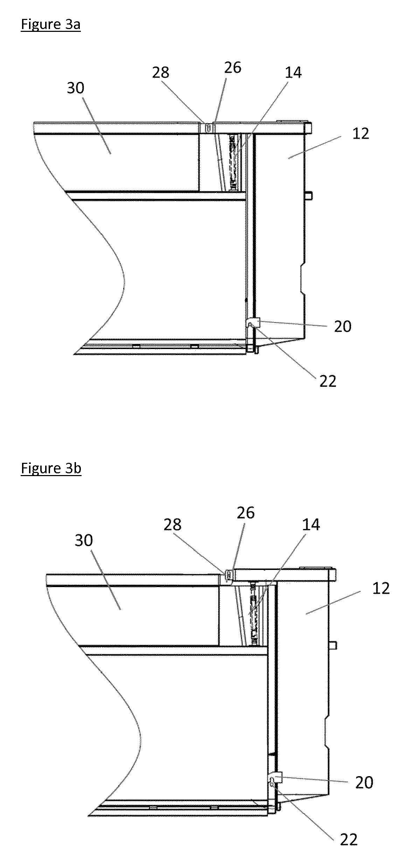

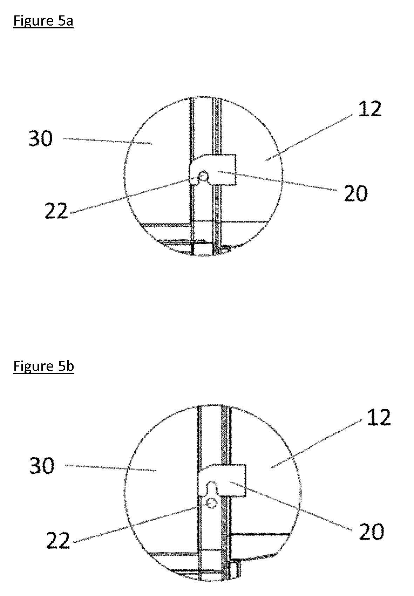

Figures 3a to 3d illustrate the tailgate 12 in operation. In Figure 3a, the tailgate 12 is in a closed and locked configuration wherein the locking plate 20 engages the dowel 22. By "closed" configuration, it is meant that the tailgate 12 is positioned substantially adjacent the trailer body and between the sidewalls 30 of the trailer 10. However, the tailgate 12 is still free to rotate, or pivot, about the pin 28. By "locked" configuration, it is meant that the locking plate 20 is engaged with the dowel 22, that is, the dowel 22 is positioned within the slot of the locking plate 20 (Figure 5a). In this configuration, the tailgate 12 the tailgate 12 is not free to rotate, or pivot, about the pin 28.

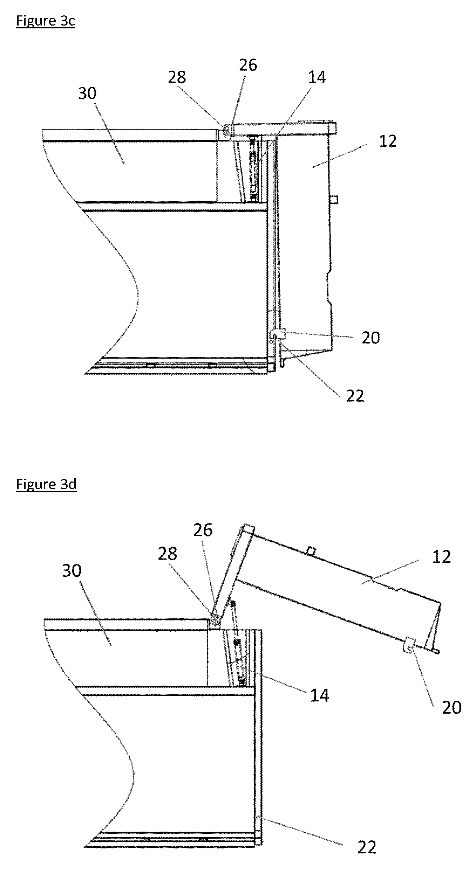

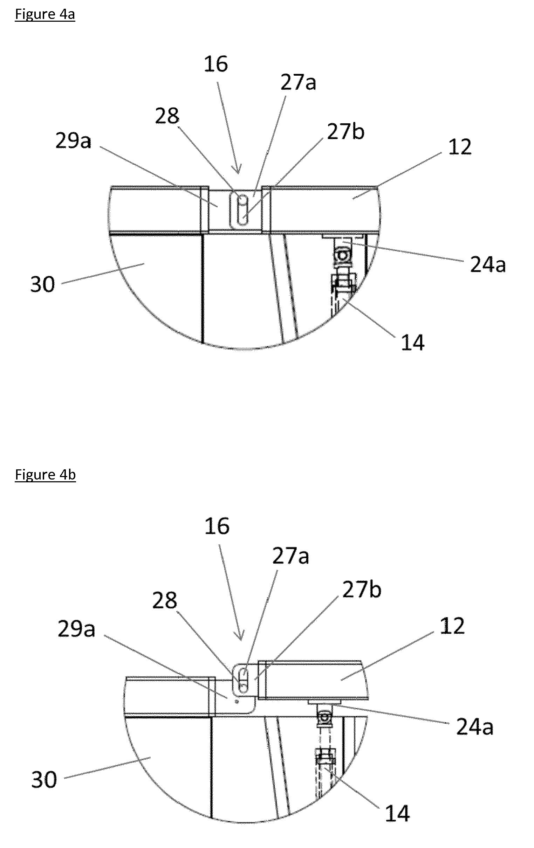

The ram 14 may be operated to lift the tailgate 12 such that the locking plate 20 no longer engages the dowel 22 (Figures 3b and 5b). This initial lifting of the tailgate 12 is facilitated by the hinge assembly 16 which couples the tailgate 12 to the trailer body. In the illustrated embodiment, the hinge assembly comprises a slotted plate 26 and a pin 28 (shown in greater detail in Figures 4a and 4b) captured within the slot. The slotted plate 26 is located on the tailgate 12 and the pin 28 is located on the sidewall 30 of the trailer 10. When the tailgate 12 is lifted by the ram 14, the slotted plate 26 moves upwards relative to the pin 28, which may be substantially stationary. Continued extension of the ram 14 causes the pin 28 to reach the end of the slot and abut against the slotted plate 26 (Figures 3b and 4b) such that the tailgate 12 can not be lifted any further. The tailgate is still closed but is not locked (Figure 3b). Further extension of the ram 14 causes the tailgate 12 to now rotate (or pivot) about the pin 28 (Figure 3c). The ram 14 may continue to be operated until it is fully extended (Figure 3d). In this open configuration, materials may be loaded into, or ejected from, the trailer.

To close the tailgate 12, the ram 14 is retracted in order to reverse the above process. The tailgate 12 is kept in the lifted position until the slot of the locking plate 20 and the dowel 22 have aligned (which alignment can be seen in Figure 3b). The tailgate 12 is closed but is not locked. Further retraction of the ram 14 causes the tailgate 12 to be lowered until the locking plate 20 re-engages the dowel 22 (Figures 3a and 5a). In the illustrated embodiment, the weight at the tailgate 12 side of the cylinder mounting 24b creates a moment which forces the pin 28 on the trailer body to remain at the lower end of the slot in the slotted plate 26 until the locking plate 20 and the dowel 22 are substantially aligned for engagement. Retaining the tailgate 12 in the lifted position until the locking plate 20 and the dowel 22 are aligned is critical to facilitate the locking of the tailgate 12.

In other embodiments, the slotted plate 26 may be located on the sidewall 30 of the trailer 10 and the pin 28 is on the tailgate 12. Thus, when the tailgate 12 is lifted by the ram 14, the pin 28 moves relative to the substantially stationary slotted plate 26. Further extension of the ram 14 causes the tailgate to rotate, or pivot, about the axis of the pin 28.

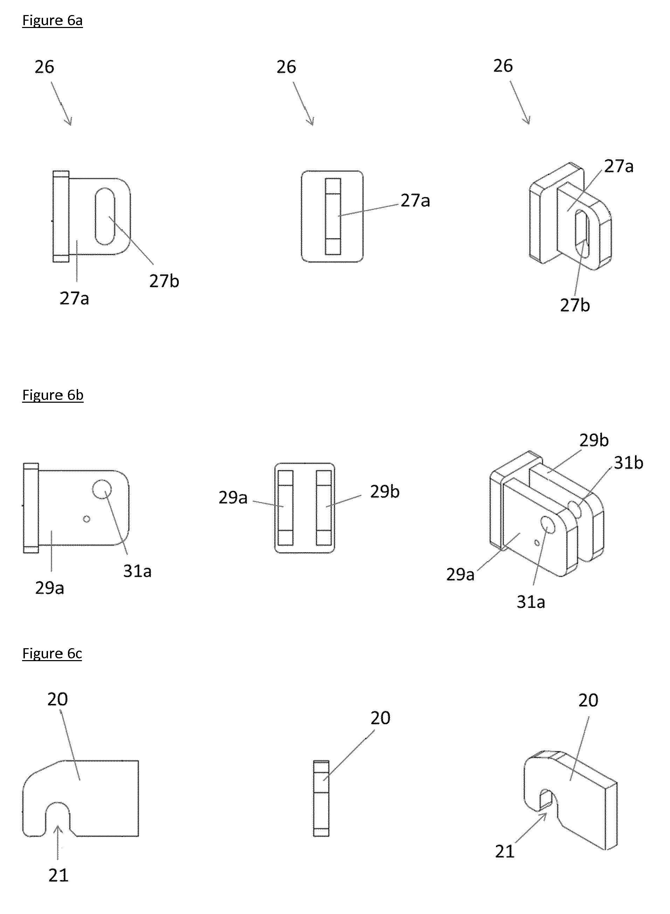

As illustrated in Figure 6a, the slotted plate 26 comprises a plate 27a and a slot 27b formed in the plate 27a. The slot 27b may extend through the plate 27a and thus form an aperture or opening in the plate 27a. The slot 27b is sized and shaped to receive and retain the pin 28. The slotted plate 26 may be fixed to the tailgate 12 and the pin 28 disposed on the trailer body or sidewall 30 of the trailer body. Alternatively, the pin 28 may be disposed the tailgate 12 and the slotted plate 26 fixed to the trailer body or sidewall 30 of the trailer body.

The pin 28 may be supported by two support plates 29a,29b (Figure 6b) which may be fixed to the tailgate 12, or to the trailer body or sidewall 30 of the trailer body. The pin 28 may be inserted into holes 31 a,31 b of the support plates 29a,29b and thus may be reversibly coupled to the support plates 29a,29b. In use, the slotted plate 26 may be positioned between the support plates 29a,29b such that the slot 27b and the holes 31a,31b are substantially aligned. The pin 28 may be inserted into holes 31 a,31 b of the support plates 29a,29b and the slot 27b of the slotted plate 26 and thus may be reversibly coupled to the support plates 29a,29b and the slotted plate 26.

As illustrated in Figure 6c, the locking plate 20 comprises a slot 21 which may be sized and shaped to receive, and reversibly retain, the dowel 22. The locking plate 20 may be located on the tailgate 12 and the dowel 22 on the trailer body or sidewall 30 of the trailer body. The locking plate 20 is reversibly engagable with the dowel 22.

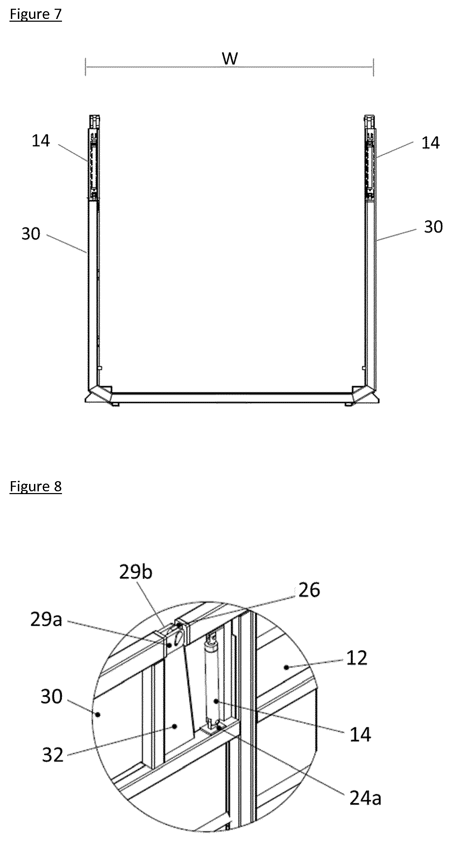

Advantageously, the tailgate 12, the ram 14 and/or the hinge assembly 16 may be arranged such that they do not extend beyond, or do not substantially extend beyond the width (W) of the trailer 10 (see Figure 5). Thus, these components are not susceptible to impacting or getting caught in, and damaged by, obstacles (e.g. a gate or gate posts). In certain embodiments, the sidewall 30 of the trailer 10 comprises a formed space 32 (e.g. a cavity) in which the ram 14 may be mounted to the sidewall 30. In this arrangement, the ram 14 does not extend beyond the width (W) of the trailer 10 as illustrated in Figures 7 and 8.

In further embodiments, the trailer 10 may be configured to be reversibly attached to a tractor or other towing vehicle. Thus, the trailer 10 may further comprise a tow bar and/or hitching mechanism (not shown) for attaching the trailer 10 to the tractor or other towing vehicle which have a corresponding hitching mechanism. Suitable tow bars and hitching mechanisms are well known in the art. The trailer may further comprise two or more ground wheels 34 suitable for keeping the trailer 10 spaced apart from the ground.

The trailer 10 may alternatively be configured to be mounted to a vehicle, such as a flatbed truck. Thus, the trailer 10 may be configured to be integrally formed with a vehicle, or may be reversibly mountable to the vehicle.

The trailer 10 may further comprises connection means (not shown) to connect to a power unit operable to provide power to the ram(s) 14. The power unit may be located in a tractor or other vehicle (not shown) and power may be transferred to the trailer 10 via the connection means. Alternatively, the trailer 10 may comprise the power unit (not shown). The power unit may comprise an engine for providing hydraulic power to a hydraulic circuit in the trailer 10, the hydraulic circuit driving the movement of the ram(s) 14. Alternatively, the power unit may be a generator for supplying electrical power, a compressor for supplying pneumatic power, an engine for providing mechanical power, or any combination of these and other known power mechanisms, operable to provide power to suitable rams comprised in the trailer 10.

The invention is not limited to the embodiments described herein but can be amended or modified without departing from the scope of the present invention as defined by the appended claims.

## Claims

1. A trailer comprising a trailer body coupled to a lockable tailgate,
at least one ram disposed between the trailer body and the tailgate,
wherein the trailer body is coupled to the lockable tailgate by at least one hinge assembly and at least one locking device, and
wherein the ram is operable to open and close the tailgate.

2. The trailer of Claim 1 wherein the hinge assembly comprises a slotted hinge.

3. The trailer of Claim 2 wherein the slotted hinge comprises a first hinge part comprising a pin and a second hinge part comprising a slotted plate having a slot sized and shaped for receiving and retaining the pin, and wherein the slotted plate can undergo translational movement about the pin.

4. The trailer of any one of the preceding claims, wherein the locking device comprises a first device part comprising a locking plate and a second device part comprising a dowel, and wherein the locking plate and the dowel are reversibly engagable.

5. The trailer of claim 4, when dependent on claim 3, wherein the at least one ram is operable to simultaneously effect translation of the slotted plate relative to the pin and translation of the locking plate relative to the dowel.

6. The trailer of Claim 4 or 5 wherein the locking plate comprises a slot that is sized and shaped to receive the dowel.

7. The trailer of any of Claims 4 to 6 wherein when the tailgate is in a closed or locked position, the locking plate is disposed in the interior of the trailer.

8. The trailer of any one of Claims 3 to 7 wherein the at least one ram is operable to lift the tailgate and rotate, or pivot, the tailgate about the pin.

9. The trailer of any one of the preceding claims wherein the trailer body comprises opposing and spaced apart first and second sidewalls, the tailgate being disposed between the first and second sidewalls and coupled to at least one of said sidewalls by the at least one hinge assembly.

10. The trailer of any one of the preceding claims comprising a second ram that is operable to rotate, or pivot, the tailgate about the pin.

11. The trailer of any one of the preceding claims wherein the at least one ram is disposed between, and mounted to, the trailer body and the tailgate.
